Europäisches Patentamt

European Patent Office

Office européen des brevets

(19)

(11) Veröffentlichungsnummer: **0 155 693**
**B1**

(12) ## EUROPÄISCHE PATENTSCHRIFT

(45) Veröffentlichungstag der Patentschrift:
30.08.89

(21) Anmeldenummer: 85103354.8

(22) Anmeldetag: 22.03.85

(51) Int. Cl.⁴: **B 01 F 7/10, C 12 G 1/02**

(54) Verfahren und Vorrichtung zum Behandeln von flüssigen Nahrungsmitteln, insbesondere Rotwein-Maische.

(30) Priorität: 22.03.84 DE 3410457

(43) Veröffentlichungstag der Anmeldung:
25.09.85 Patentblatt 85/39

(45) Bekanntmachung des Hinweises auf die Patenterteilung: 30.08.89 Patentblatt 89/35

(84) Benannte Vertragsstaaten:
AT BE CH DE FR GB IT LI NL

(56) Entgegenhaltungen:
FR–A– 831 877
FR–A– 2 402 470
FR–A– 2 512 056
GB–A– 149 136

(73) Patentinhaber: Rieger, Herbert
Talstrasse 33
D-7121 Ingersheim (DE)

(72) Erfinder: Rieger, Herbert
Talstrasse 33
D-7121 Ingersheim (DE)

(74) Vertreter: Witte, Alexander, Dr.-Ing.
Witte, Weller & Hilgenfeldt Patent- und Rechtsanwälte
Augustenstrasse 7
D-7000 Stuttgart 1 (DE)

EP 0 155 693 B1

## Beschreibung

Die Erfindung bezieht sich auf ein Verfahren zum Behandeln von Nahrungsmitteln in Form einer Flüssigkeit mit Festbestandteilen, bei dem das Nahrungsmittel von unten in einen Tank eingefüllt wird, bis der Spiegel der Flüssigkeit oberhalb eines im oberen Teil des Tanks angeordneten, die gesamte Querschnittsfläche ausfüllenden und die Festbestandteile zurückhaltenden Siebes steht und das Nahrungsmittel in diesem Zustand für eine vorbestimmte Stillstandszeit sich selbst überlassen wird.

Die Erfindung betrifft ferner eine Vorrichtung zur Behandlung von Nahrungsmitteln in Form einer Flüssigkeit mit Festbestandteilen, mit einem Tank, an dessen Unterseite ein Einfüllstutzen zum Einpumpen des Nahrungsmittels angeordnet und der mit einem den gesamten lichten Querschnitt des Tanks senkrecht zur Hochachse überspannenden Sieb versehen ist, das im oberen Bereich des Tanks dicht unterhalb einer, einem vorgegebenen Spiegel des einzupumpenden Nahrungsmittels entsprechenden Höhe angeordnet ist.

Die Erfindung bezieht sich dabei insbesondere auf ein neuartiges Verfahren und eine neuartige Vorrichtung zum Behandeln von Rotweinmaische, bei der ein flüssiger Traubensaft feste Tresterbestandteile enthält. Wird diese Rotweinmaische in den Tank eingepumpt, steigt der Spiegel des Traubensaftes bis oberhalb des Siebes, das die Tresterbestandteile zurückhält.

Die Erfindung betrifft somit sowohl das Anwendungsgebiet der Behandlung von Rotweinmaische wie auch allgemeinere Anwendungen bei Nahrungsmitteln in Form einer Flüssigkeit mit Festbestandteilen, wie sie beispielsweise verwendet werden, um Auszüge aus pflanzlichen und tierischen Produkten herzustellen.

Aus der DE-C-628 392 sind ein Verfahren und eine Einrichtung zur Rotweinbereitung bekannt, bei denen in einem stehenden Tank in etwa 3/4 der Tankhöhe ein panzerhemdartiges, bauchig nach unten durchhängendes Sieb angeordnet ist. Die Rotweinmaische mit Tresterbestandteilen wird in den Raum unterhalb des Siebes eingebracht, bis ein Pegel erreicht ist, bei dem der Spiegel des Traubensaftes oberhalb des Siebes steht. Während der nachfolgenden Gärung steigen die Tresterbestandteile nach oben und wölben das Sieb nach oben aus. Wird nun die Maische unterhalb des Siebes abgepumpt, kehrt sich die Wölbungsrichtung des Siebes wieder um, der Tresterkuchen, der sich unterhalb des Siebes gebildet hat, zerbricht, und die Festbestandteile fallen auf den Boden des nun leergepumpten Tanks.

Bei diesem bekannten Verfahren wird demzufolge keine weitere mechanische Einwirkung auf die Maische vorgenommen, so daß nur eine begrenzte Auslaugung der im wesentlichen in den Häuten der Trauben befindlichen roten Farbstoffe eintritt.

Aus der AT-B-231 930 ist eine Vorrichtung zum Vergären von Rotweinmaische bekannt, bei der ein kegelstumpfförmig sich nach oben verjüngender Gärständer als Maischebehälter verwendet wird. Auch bei diesem Gärständer ist im oberen Bereich ein den Querschnitt ausfüllendes Sieb vorgesehen, das die nach oben steigenden Tresterbestandteile unterhalb des Flüssigkeitsspiegels hält. Es ist ferner unterhalb des Siebes ein um eine horizontale Achse drehbares Rührwerk vorgesehen, das mit löffelartigen Rührwerksarmen versehen ist und dazu dienen soll, die Maische durchzurühren.

Es wird zwar bei dieser bekannten Vorrichtung auf diese Weise eine bessere Farbstoffauslaugung erzielt, allerdings ist die Handhabung der Vorrichtung verhältnismäßig umständlich und offenbar nur für Kleinmengen vorgesehen und geeignet. Der Gärständer muß nämlich mangels einer Einfüllmöglichkeit von unterhalb des Siebes her durch die obere Öffnung befüllt werden, während dessen naturgemäß das Sieb entfernt ist. Das Sieb muß dann nachträglich durch die Maische hindurch auf seinen Sitz gebracht und dort verankert werden, damit die nach oben steigenden Trester es nicht anheben. Schließlich ist das vorgeschlagene Rührwerk relativ kompliziert im Aufbau und schwierig zu reinigen, so daß die bekannte Vorrichtung für Kellereianlagen insgesamt nicht einsetzbar ist.

Aus der DE-C-258 102 ist eine Vorrichtung zum Aufwärts- und Abwärtsbewegen des Senkbodens in Traubenmaischebottichen bekannt, bei der an Bord eines Eisenbahnwagens ein stehender Maischebehälter vorgesehen ist, dessen als « Senkboden » bezeichnetes Sieb durch eine Spindelführung in eine Höhe gebracht werden kann, daß es — je nach Menge der eingefüllten Maische — kurz unterhalb der Oberfläche der Maische steht.

Auch bei dieser bekannten Vorrichtung sind keinerlei Mittel vorgesehen, um die Maische zusätzlich mechanisch zu behandeln.

In dem Buch « Technologie des Weines » von G. Troost, Verlag Eugen Ulmer, Stuttgart, 1972, Band 1, Seite 176, ist ebenfalls ein Behälter zur offenen Gärung mit einem « Senkboden » beschrieben, der jedoch ebenfalls ausschließlich von oben befüllt wird, so daß sich die Handhabungsschwierigkeiten beim Einsetzen des Siebes einstellen, wie bereits oben geschildert. Weiterhin sind jedoch auch bei dieser bekannten Vorrichtung keine Mittel vorgesehen, um die Maische mechanisch zu behandeln.

In der FR-A-2 440 991 sind ein Verfahren und eine Vorrichtung zum Gären von Rotwein-Maische beschrieben, wobei im oberen Teil eines stehenden kreiszylindrischen Tanks ein den Querschnitt ausfüllendes Sieb vorgesehen ist, unter das mittels eines seitlich in den Tank einmündenden Rohres die Maische eingepumpt werden kann. Allerdings ist der Tank an seiner Oberseite hermetisch verschlossen, und die Maische wird nur bis zu einem Füllstand kurz unterhalb des Siebes eingepumpt. Von einer im unteren Teil des Tanks befindlichen Saftkammer führt eine mit einer Pumpe versehene Leitung in den Bereich des Domes des Tanks, und es kann demzufolge Saft an der Unterseite des Tanks abgesaugt und oberhalb des Siebes wieder eingepumpt werden.

Bei dieser bekannten Anordnung wirkt daher das Sieb nicht unmittelbar auf den Gärvorgang ein, und es sind auch keine mechanischen Behandlungsmittel für die Rotwein-Maische vorgesehen.

In der FR-A-2 168 214 ist eine Großanlage zum Gären von Rotwein-Maische beschrieben, bei der insgesamt sieben Tanks kaskadenartig miteinander verbunden sind. Bei drei kreiszylindrischen Tanks befindet sich im oberen Bereich ein Sieb, und es wird die ankommende Rotwein-Maische unterhalb des Siebes in die Tanks eingepumpt, bis der Spiegel der Flüssigkeit oberhalb der Siebe steht. Es kann nun aus dem Bereich oberhalb des Siebes Traubensaft entnommen und in den Bereich unterhalb des Siebes des benachbarten Tanks eingefüllt werden. Es ist ferner die Möglichkeit vorgesehen, auch Saft unterhalb des Siebes abzusaugen und über ein springbrunnenartig arbeitendes Rohr in den Bereich oberhalb des Siebes zu pumpen.

Auch bei dieser bekannten Anlage ist, abgesehen von ihrer erheblichen Komplexität, nicht vorgesehen, die Maische mechanisch zu behandeln.

Aus der FR-C-831 877 ist ein Rührwerk für Molkereiprodukte bekannt, das in einem Behälter angeordnet ist, dessen oberer Teil stehend-kreiszylindrisch und dessen unterer Teil halbkugelförmig ausgebildet ist. Das Rührwerk ist um eine horizontale Achse drehbar, die den Behälter ungefähr im Übergang zwischen dem halbkugelförmigen Bereich und dem stehend-zylindrischen Bereich durchsetzt. Von der Rührwerkswelle stehen beidseitig Rührelemente in Form halbkreisförmig verlaufender Bögen ab, von denen mehrere über den Umfang der Welle verteilt angeordnet sind.

Ein ähnliches Rührwerk ist aus der GB-A-149 136 bekannt und soll zum Rühren und Vermischen von flüssigen oder halbflüssigen Substanzen dienen.

Die beiden vorstehend erläuterten Rührwerke haben jedoch den gemeinsamen Nachteil, daß sie lediglich ein Rühren erlauben, es ist hingegen nicht möglich, Festbestandteile in der Flüssigkeit unterhalb des oberen Flüssigkeitsspiegels zu halten, weil die Rührwerke jeweils nur durch dünne kreisbogenförmige Stäbe gebildet werden.

Ein weiteres, ähnliches Rührwerk zeigt auch die FR-A-2 402 470, bei dem auch ein zylindrischer/halbkugelförmiger Behälter vorgesehen ist und das Rührwerk ein durchgehend kreisbogenförmiges Rührelement aufweist, das ein großes « Fenster » bildet und damit zum Zurückhalten von Festbestandteilen in Flüssigkeiten nicht geeignet ist.

Aus der FR-A-2 512 056 ist schließlich noch ein stehend-zylindrischer Tank für die Weinbereitung bekannt, der im Bodenbereich durch zwei schräge Bleche in eine Schneckenrinne übergeht, an deren Boden sich eine horizontal verlaufende Ausräumschnecke befindet. Oberhalb der Ausräumschnecke ist ein horizontalachsiges, mit der Ausräumschnecke synchron umlaufendes Rührwerk vorgesehen, das jedoch lediglich aus einer schmalen, sich horizontal erstreckenden Platte besteht und damit weder dazu geeignet, noch dazu vorgesehen ist, um den Tankinhalt durchzurühren, noch um feste Bestandteile in der Flüssigkeit unterhalb des Flüssigkeitsspiegels zu halten, weil dieses Rührwerk lediglich dazu dient, Ansammlungen von Feststoffen oberhalb der Schnecke zu zerteilen, so daß sich keine Brücken von Festbestandteilen oberhalb der Schnecke bilden.

Der Erfindung liegt demgegenüber die Aufgabe zugrunde, ein Verfahren und eine Vorrichtung der eingangs genannten Art dahingehend weiterzubilden, daß bei optimal schonender Behandlung der Rotweinmaische eine hohe Weinqualität in Gestalt einer besonders schönen Farbe des Rotweins erzielbar ist bzw. bei Nahrungsmitteln in Form einer Flüssigkeit mit Festbestandteilen eine schonende Behandlung des Nahrungsmittels gewährleistet ist.

Gemäß dem eingangs genannten Verfahren wird diese Aufgabe erfindungsgemäß dadurch gelöst, daß man als Sieb ein um eine horizontale Achse drehbares Sieb einsetzt und die Nahrungsmittel nach Ablauf einer vorbestimmten Zeit durch Drehen dieses Siebes durchrührt.

Gemäß der eingangs genannten Vorrichtung wird die Aufgabe dadurch gelöst, daß das Sieb um eine waagerechte Achse drehbar ist.

Das erfindungsgemäße Verfahren und die erfindungsgemäße Vorrichtung haben im Falle der Rotweinbehandlung weitere Vorteile. Zunächst werden die aus einigen der eingangs genannten Druckschriften bekannten Vorteile beibehalten. Diese bestehen darin, daß die Farbstoffe durch das Gären der Maische und die aufsteigenden Bläschen beim Moussieren der Maische von selbst aus den Tresterbestandteilen herausgewaschen werden, die sich unterhalb des Siebes ansammeln. Die Farbstoffe werden hierdurch in den oberhalb des Siebes befindlichen reinen Traubensaft überführt. Die zusätzlichen Vorteile der vorliegenden Erfindung bestehen nun darin, daß die Farbstoffauslaugung erheblich erhöht wird. Dies geschieht im wesentlichen deswegen, weil die Maische mechanisch durchgerührt wird. Das Durchrühren ist zum einen sehr einfach, weil keine zusätzlichen Vorrichtungen im Tank erforderlich sind und zum anderen auch sehr schonend, weil das den gesamten Querschnitt ausfüllende Sieb die Maische schonend wendet. Hierbei werden weder Trübstoffe, noch bittere Geschmacksbestandteile aus den Kernen freigesetzt.

Es ist zwar an sich bekannt, eine höhere Farbstoffauslaugung bei der Behandlung von Rotweinmaische dadurch zu erzielen, daß man die Rotweinmaische während des Gärens durchrührt. Gegenüber diesem bekannten Verfahren ergibt sich jedoch erfindungsgemäß der Vorteil, daß nahezu die gesamte Gärzeit ohne Rühren abläuft, während die eigentliche Rührzeit im Verhältnis zur gesamten Gärzeit nur recht gering ist. Auch ergibt sich gegenüber diesem bekannten Verfahren der bereits genannte Vorteil der extrem schonenden Maischebehandlung durch die besondere Gestaltung des zum Wenden dienenden Siebes.

Bei einer weiteren Ausgestaltung der Erfindung wird während des Gärens Traubensaft bzw. während des Stillstandes Flüssigkeit oberhalb des Siebes abgesaugt und unterhalb des zur Unterseite des Siebes aufgestiegenen Tresters bzw. unterhalb der zur Unterseite des Siebes aufgestiegenen Festbestandteile wieder in den Tank eingepumpt.

Bei dieser Ausführungsform des erfindungsgemäßen Verfahrens wird damit zwar eine mechanische Bewegung des Traubensaftes bzw. der Flüssigkeit während der Stillstandszeit in Kauf genommen, durch den genannten Kreislauf des Traubensaftes bzw. der Flüssigkeit durch die Trester bzw. die Festbestandteile und das Sieb hindurch wird jedoch die Auswaschung der Farbstoffe bzw. die Auslaugung der Festbestandteile weiter intensiviert, insbesondere deshalb, weil im Falle der Rotweinbereitung im Gegensatz zu den gegenläufig wirkenden bekannten Umpumpprozessen aus dem Stand der Technik die natürliche Bewegung des Traubensaftes von unten nach oben unterstützt wird.

Weiterhin kann die Maische bzw. das Nahrungsmittel zum Beschleunigen des Gärbeginns bzw. zur Förderung des Auslaugprozesses mit in dem Sieb enthaltener Wärmetauscher geheizt und-/oder während des Gärens bzw. Auslaugens gekühlt werden, wie dies an sich bekannt ist.

Diese Maßnahme hat den Vorteil, daß die Temperatur der Maische bzw. des Nahrungsmittels während des gesamten Prozesses weitgehend konstant gehalten oder auf vorbestimmte Temperaturen gebracht werden kann, wobei im Falle der Rotweinbehandlung zunächst eine zu kühle Maische nur auf Gärstarttemperatur gebracht und die sich dann von selbst entwickelnde Gärwärme über die Wärmetauscher abgeführt wird.

Das bei dem vorstehend geschilderten Verfahren bzw. der Vorrichtung verwendete Sieb kann eben ausgebildet sein.

Diese Maßnahme hat den Vorteil, daß die Tresterbestandteile der Maische bzw. die festen Bestandteile des Nahrungsmittels, die aufgrund ihres geringeren Gewichtes nach oben steigen und sich unterhalb des Siebes ansammeln, dort gleichmäßig verteilt werden, was bei einem trichterartigen oder konischen Sieb weniger der Fall wäre, weil dort die Tresterbestandteile bzw. Festbestandteile seitlich nach oben zum höchsten Punkt des Siebes rutschen würden.

Der Tank kann im wesentlichen aus einem hochkant stehenden kreiszylindrischen Teil bestehen, und das Sieb kann kreisförmig sein.

Diese Maßnahme hat den Vorteil, daß die Vorrichtung bei üblichen Tanks verwendet werden kann, so daß Neukonstruktionen des Tanks selbst nicht erforderlich sind. Auch läßt sich in derartigen Fällen die Vorrichtung bei bereits vorhandenen Tanks leicht nachrüsten.

Bei einer weiteren Ausgestaltung der Erfindung ist oberhalb des Siebes und unterhalb des Spiegels in der Wandung des Tanks ein Auslaßstutzen angeordnet, der über eine Leitung und eine Pumpe mit einem Einlaß verbunden ist, der unterhalb des Siebes in den Tank mündet.

Diese Maßnahmen haben den ebenfalls weiter oben zum erfindungsgemäßen Verfahren bereits geschilderten Vorteil, daß ein geschlossener Kreislauf des Traubensaftes bzw. der Flüssigkeit hergestellt werden kann, der für ein noch effektiveres Auswaschen bzw. Auslaugen sorgt.

Besonders vorteilhaft ist es dabei, als Einlaß den Einfüllstutzen selbst zu verwenden, weil hierdurch zusätzliche Armaturen entfallen.

Bei einer besonders bevorzugten Ausführungsform der Erfindung ist der Einlaß eine radiale Leitung des Siebes, die in eine axiale Leitung eines nach unten weisenden axialen Armes übergeht, der an seinem unteren Ende mit einem Sprühkopf mit nach oben weisenden Düsen versehen ist.

Diese Maßnahme hat bei der Rotweinbereitung den Vorteil, daß der unterhalb der Tresterbestandteile eingepumpte Traubensaft gleich in Richtung auf die Trester eingepumpt wird, so daß unnötige Turbulenzen im Traubensaftanteil unterhalb des Tresters vermieden werden.

Weiterhin sind die genannten Merkmale dann von Vorteil, wenn das Sieb an der Tankinnenseite in höhenverstellbaren Halterungen gehalten ist, dann ist nämlich die Art des Einpumpens unabhängig von der jeweiligen Höhe des Siebes, weil der Sprühkopf mit dem Sieb in axialer Richtung verfahren wird.

Die Höhenverstellbarkeit des Siebes hat ferner den wesentlichen Vorteil, daß die erfindungsgemäße Vorrichtung unterschiedlichen Befüllungszuständen des Tanks angepaßt werden kann. Dies ist bei der Rotweinbereitung deswegen besonders wichtig, weil hochwertige Weine in aller Regel nur in sehr geringen Mengen angeliefert werden und daher mitunter noch nicht einmal einen einzigen Tank in einem Kellereibetrieb voll ausfüllen, da derartige Kellereitanks für unterschiedliche Weinqualitäten zur Verfügung stehen müssen und daher im Hinblick auf die großen angelieferten Mengen üblicher Weine auch möglichst groß ausgelegt werden, um wirtschaftlich arbeiten zu können.

Schließlich kann in weiterer Ausgestaltung der Erfindung das Sieb in an sich bekannter Weise mit einem Wärmetauscher versehen sein, um die bereits weiter oben erläuterte Temperierung der Maische bzw. des Nahrungsmittels vor dem Gären und während des Gärens bzw. während des Stillstandes vornehmen zu können.

Bevorzugt besteht der Tank aus Stahl oder Edelstahl, er kann aber, sofern die statischen Bedingungen dies zulassen, aus Kostengründen auch aus Kunststoff, insbesondere glasfaserverstärktem Kunststoff, bestehen. Diese Wahlmöglichkeit innerhalb des Materials gilt auch für die Komponenten des Tanks, d.h. die Rührwerke, Verschlüsse, Siebe u. dgl.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen :

Fig. 1 eine Seitenansicht (teilweise aufgebrochen) eines ersten Ausführungsbeispieles einer erfindungsgemäßen Vorrichtung und zum Erläutern einer Ausführungsform eines erfindungsgemäßen Verfahrens ;

Fig. 2 eine Darstellung nach Art eines Ausschnittes aus Fig. 1, jedoch zur Erläuterung anderer Ausführungsformen von erfindungsgemäßen Vorrichtungen und Verfahren ;

Fig. 3 eine weitere Darstellung nach Art von Fig. 2 zur Erläuterung weiterer Ausführungsformen erfindungsgemäßer Verfahren und Vorrichtungen.

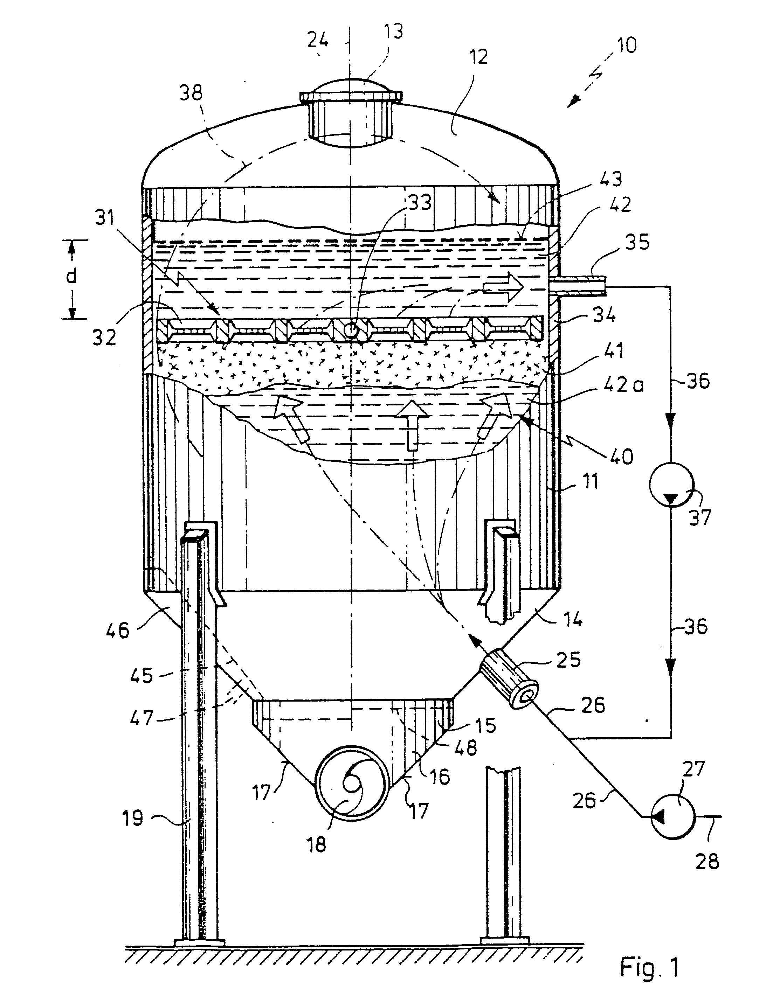

In Fig. 1 bezeichnet 10 insgesamt einen stehenden Tank, wie er nach seiner äußeren Gestalt üblicherweise zur Behandlung von Rotwein-Maische verwendet wird. Der Tank 10 besteht im wesentlichen aus einem zylindrischen Teil 11, der oben mit einem Dom 12 abgeschlossen ist, in der sich eine Öffnung 13 befindet, die beispielsweise als Mannloch ausgebildet sein kann.

Unten schließt sich an den zylindrischen Teil 11 ein konischer Teil 14 an, der an seiner Unterseite wiederum in einen zylindrischen Abschnitt 15 übergeht. Der zylindrische Abschnitt 15 geht an seiner Unterseite wiederum in einen sich verjüngenden Abschnitt 16 über, der dadurch entsteht, daß der zylindrische Abschnitt 15 seitlich von zwei ebenen Schrägflächen 17 geschnitten ist. Zwischen den Schrägflächen 17 ist eine Austragschnecke 18 angeordnet.

Der Tank 10 sowie ggf. vorgesehene Komponenten wie Rührwerke, Siebe, Verschlüsse und dgl. können aus Stahl, Edelstahl oder Kunststoff, insbesondere glasfaserverstärktem Kunststoff bestehen.

Der Tank 10 wird insgesamt von mehreren Beinen 19 getragen, die im Übergangsbereich vom zylindrischen Teil 11 zum konischen Teil 14 am Tank 10 angreifen.

Die Hochachse des Tanks 10 ist mit 24 bezeichnet.

Im Bereich des konischen Teils 14 erkennt man einen Einfüllstutzen 25, zu dem eine nur schematisch angedeutete Leitung 26 führt. Eine Pumpe 27 ist an die Leitung 26 angeschlossen und kann aus einer Leitung 28, die beispielsweise zu einem anliefernden Fahrzeug führt, Maische über die Leitung 26 und den Einfüllstutzen 25 in den Tank 10 von unten einpumpen.

Im oberen Bereich des Tanks 10 erkennt man ein waagerecht angeordnetes, ebenes Sieb 31, das beispielsweise aus einem Rahmenkörper und mehreren eingesetzten Siebeinsätzen 32 bestehen kann. Das Sieb 31 kann um eine horizontal verlaufende Achse 33, die senkrecht zur Zeichenebene von Fig. 1 angeordnet ist, drehbar angeordnet sein, wie dies mit der Drehrichtung 38 angedeutet ist.

Oberhalb des Siebes 31 kann in der Wandung 34 des Tanks 10 ein Auslaßstutzen 35 vorgesehen sein, von dem eine nur schematisch angedeutete Leitung 36 zu einer weiteren Pumpe 37 führt und von dort weiter als Stichleitung zur Leitung 26, die in den Einfüllstutzen 25 mündet. Es versteht sich, daß die Pumpen 27 und 37 auch ein und dieselbe Pumpe sein können und die Rohrleitungen durch geeignete Ventilanordnungen entsprechend verschaltet sind.

Die über den Einfüllstutzen 25 von unten in den Tank 10 eingepumpte Maische ist mit 40 angedeutet. Die Maische 40 enthält feste Bestandteile, sogenannte Trester 41, die aufgrund ihres geringeren Gewichtes nach oben aufsteigen und sich daher unterhalb des Siebes 31 ansammeln, das den gesamten lichten Innenquerschnitt des Tanks 10 überspannt. Erfindungsgemäß wird mehr Maische 40 in den Tank 10 eingepumpt, als dem Volumen unterhalb des Siebes 31 entspricht. Aufgrund dessen steigt Traubensaft 42 durch das Sieb 31 hindurch, bis ein Spiegel 43 erreicht ist, der in einer Höhe d oberhalb des Siebes 31 steht.

Bei einer Ausführungsform der Erfindung beträgt die Höhe d des Spiegels 43 beispielsweise 15 cm. Es muß dabei darauf geachtet werden, daß oberhalb des Spiegels 43 und unterhalb des Domes 12 noch genügend Gärraum zur Verfügung bleibt, damit die Maische 40 während des Gärens noch genügend Raum hat.

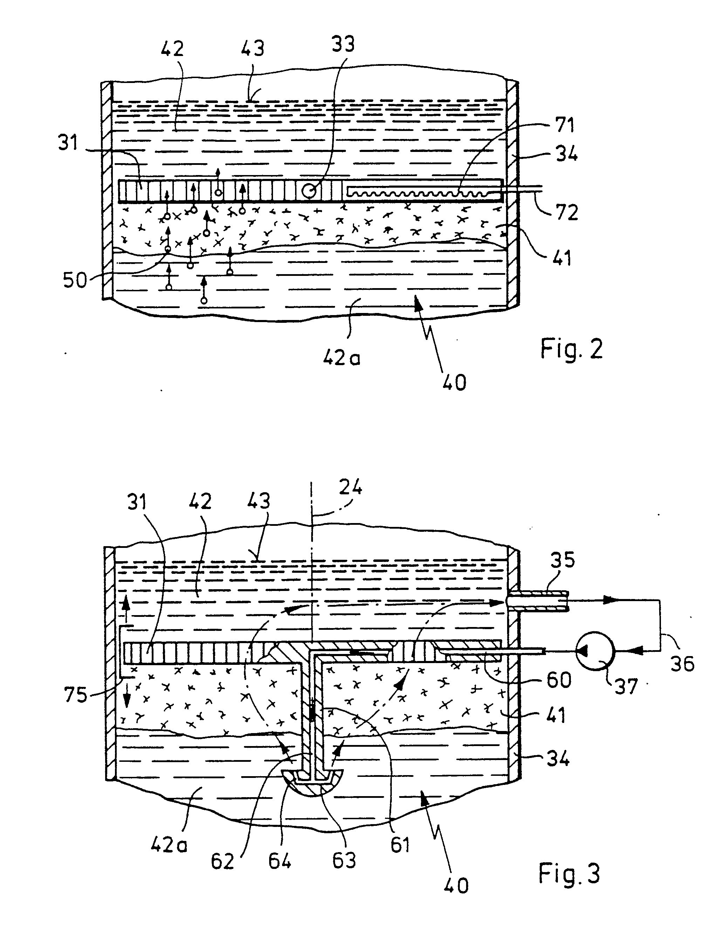

Wie bereits erwähnt, wird zunächst über die Pumpe 27 die Maische 40 von unten in den Tank 10 eingepumpt, bis der Traubensaft oberhalb des Siebes 31 den Spiegel 43 erreicht hat. Die Maische kann nun zunächst sich selbst überlassen werden, wie dies weiter unten zu Fig. 2 noch erläutert werden wird. Bei einer Ausführungsart des erfindungsgemäßen Verfahrens wird jedoch ein geschlossener Kreislauf mittels der Leitung 36 und der Pumpe 37 hergestellt, in dem Traubensaft 42 oberhalb des Siebes 31 abgesaugt und über den Einfüllstutzen 25 oder einen weiteren getrennten Stutzen von unten wieder in den Tank 10 eingepumpt wird. Es ergibt sich dann der mit Pfeilen in Fig. 1 eingezeichnete geschlossene Kreislauf, aus dem man ohne weiteres erkennen kann, daß der den Trester 41 durchspülende Traubensaft 42 ohne weiteres die roten Farbstoffe aus den Traubenschalen, die Bestandteil des Tresters 41 sind, herauswaschen kann.

Sofern erforderlich, oder bei bestimmten Weinen aufgrund eines besonders fest zusammenbackenden Tresters 41 erforderlich, kann zum Abschluß des erfindungsgemäßen Verfahrens das Sieb 31 in Rotation um die Achse 33 versetzt werden, beispielsweise mittels eines in Fig. 1 nicht dargestellten Antriebes, so daß sich eine Bewegung in der Richtung 38 gemäß Fig. 1 ergibt. Durch diesen letzten Verfahrensschritt kann dann einmal der Trester 41, der zu diesem Zeitpunkt einen festen Tresterkuchen gebildet hat, zerbrochen werden, und zum anderen kann durch einen letzten Rührschritt beim erfindungsgemäßen Verfahren noch ein weiteres Auswaschen der Farbstoffe aus den Bruchstücken des Tresterkuchens erfolgen. Ein Durchrühren mittels des Siebes 31 an der Oberfläche der Maische 40 ist dabei vollkommen ausreichend, weil — wie erwähnt — sich die festen, die Farbstoffe enthaltenden Bestandteile des Tresters 41 ohnehin an der Oberfläche der Maische 40 befinden. Dadurch wird auch eine unzulässige Bewegung der Maische 40 im unteren Bereich des Tanks vermieden, die allenfalls zum Ausfallen von Trubstoffen, d.h. einer Qualitätsverminderung des Weines führen würde.

Nach Beendigung des Auswaschvorganges, sei es mit oder ohne abschließendes Durchrühren der Maische, kann dann der Traubensaft 42 in an sich bekannter Weise unten aus dem Tank 10 abgelassen werden. Hierzu kann beispielsweise eine in Fig. 1, linke Hälfte, unten eingezeichnete Vorrichtung dienen, bei der ein trichterförmiges Sieb 45 im Abstand von der Wandung 34 im Bereich der Teile 11, 14, 15 angeordnet ist. Damit wird unterhalb des Siebes 45 eine Saftkammer 46 definiert, von der ein Stutzen 47 nach außen führt. Durch den Stutzen 47 kann der Traubensaft 42 abgelassen werden, während das Sieb 45 den Trester 41 zurückhält.

Weiterhin kann man jedoch auch den zylindrischen Teil 15 mit einem ebenen kreisförmigen Sieb 48 versehen, wie dies die rechte untere Hälfte von Fig. 1 zeigt, so daß die Saftkammer durch den sich verjüngenden Abschnitt 16 gebildet wird und der Traubensaft 42 über die Austragschnecke 18 selbst abgelassen werden kann.

In Fig. 2 ist eine Ausführungsform der Erfindung dargestellt, bei der auf eine mechanische Einwirkung auf die Maische 40 in Form eines geschlossenen Traubensaft-Kreislaufes verzichtet wird.

Wenn sich der Trester 41 in der geschilderten Weise unterhalb des Siebes 31, das in Fig. 2 lediglich schematisiert dargestellt ist, ansammelt, fängt die Maische 40 nach einer gewissen Zeit an zu gären. Sowohl im Trester 41 wie in dem unterhalb des Tresters befindlichen Traubensaftanteil 42a bilden sich Gärbläschen 50, die nach oben steigen und den Trester 41 durchqueren. Durch die Gärbläschen 50 und die mitgerissenen Flüssigkeitsteilchen werden die roten Farbstoffe aus den Traubenschalen des Tresters 41 herausgewaschen und mit den Gärbläschen 50 nach oben in den oberhalb des Siebes 31 befindlichen reinen Traubensaft 42 befördert.

Auf diese Weise ergibt sich ein Auswaschen der roten Farbstoffe durch den Gärvorgang selbst ohne jegliche mechanische Beeinflussung der Maische 40.

In der rechten Hälfte von Fig. 2 ist noch eine Variante des Siebes 31 dargestellt, bei der dieses mit einem Wärmetauscher 71 versehen ist, der über Leitungen 72 nach außen führt und dort an eine entsprechende Einrichtung angeschlossen ist, die nicht Gegenstand der vorliegenden Erfindung ist. Mit Hilfe des Wärmetauschers 71 kann zunächst die eingefüllte Maische, die relativ kühl ist, auf die sogenannte Gärstarttemperatur gebracht werden. Bei dann ablaufender Gärung kann die entstehende Gärwärme dann durch Einleiten eines Kühlmittels in die Leitung 72 abgeführt werden, so daß die Maische 40 nicht überhitzt wird.

Fig. 3 zeigt eine weitere Variante, bei der wiederum ein geschlossener Kreislauf des Traubensaftes vorgesehen ist. In Abweichung vom Ausführungsbeispiel gemäß Fig. 1 wird jedoch der Traubensaft nicht unterhalb des Siebes 31 in den Tank zurückgefördert, sondern vielmehr in eine radiale Leitung 60 des Siebes 31 selbst, die sich in einem Teil des Siebes 31 befindet, der in Fig. 3 als abgebrochener Ausschnitt im Schnitt dargestellt ist. Im Bereich der Hochachse 24 geht das Sieb 31 in einen axial nach unten vorstehenden Arm 61 über, in dem sich eine axiale Leitung 62, die mit der radialen Leitung 60 verbunden ist, befindet. Der Arm 61 mündet unten in einen Sprühkopf 63, der mit nach oben gerichteten Düsen 64 versehen ist, die an die axiale Leitung 62 angeschlossen sind.

Wie man aus den in Fig. 3 eingezeichneten Pfeilen erkennt, stellt sich wiederum ein geschlossener Kreislauf des Traubensaftes 42 ein. Dieser wird mittels der Pumpe 37 über den Auslaßstutzen 35 oberhalb des Siebes 31 abgesaugt und über die Leitung 36 in die radiale Leitung 60 eingepumpt, gelangt über die axiale Leitung 61 zu den Düsen 64 und wird mit diesen von unten gegen den Trester 41 gespritzt bzw. gespült. Der Traubensaft 42 durchströmt damit in gezielter Richtung den Trester 41 und das Sieb 31 und gelangt somit, mit Farbstoffen angereichert, wieder in den Bereich oberhalb des Siebes 31.

Schließlich zeigt Fig. 3 noch eine weitere Variante der erfindungsgemäßen Vorrichtung, weil man im linken Teil von Fig. 3 eine höhenverstellbare Halterung 75 erkennt, mit der das Sieb 31 im Tank 10 in Richtung der Hochachse 24 verstellbar ist, um sich unterschiedlichen Befüllungszuständen des Tanks anpassen zu können.

## Patentansprüche

1. Verfahren zum Behandeln von Nahrungsmitteln in Form einer Flüssigkeit mit Festbestandteilen, bei dem das Nahrungsmittel von unten in einen Tank (10) eingefüllt wird, bis der Spiegel (43) der Flüssigkeit oberhalb eines im oberen Teil des Tanks (10) angeordneten, die gesamte Querschnittsfläche ausfüllenden und die Festbestandteile zurückhaltenden Siebes (31) steht und das Nahrungsmittel in diesem Zustand für eine vorbestimmte Stillstandszeit sich selbst überlassen wird, dadurch gekennzeichnet, daß man als Sieb (31) ein um eine horizontale Achse (33) drehbares Sieb (31) einsetzt und das Nahrungsmittel nach Ablauf einer vorbestimmten Zeit durch Drehen dieses Siebes (31) durchrührt.

2. Verfahren nach Anspruch 1, dadurch gekennzeichnet, daß während der Stillstandszeit Flüssigkeit oberhalb des Siebes (31) abgesaugt und unterhalb der zur Unterseite des Siebes (31) aufgestiegenen Festbestandteile wieder in den Tank (10) eingepumpt wird.

3. Verfahren nach Anspruch 1, dadurch gekennzeichnet, daß eine Rotweinmaische (40) behandelt wird, bei der ein flüssiger Traubensaft (42) feste Tresterbestandteile (41) enthält, daß die Maische (40) von unten in den Tank (10) eingefüllt wird, bis der Spiegel (43) in der Maische (40) oberhalb des oberen Teils des Tanks (10) angeordneten, die gesamte Querschnittsfläche ausfüllenden und die Tresterbestandteile (41) der Maische (40) zurückhaltenden Siebes (31) steht, daß die Maische (40) in diesem Zustand für eine vorbestimmte Zeit der Gärung überlassen wird, und daß die Maische (40) nach Ablauf einer vorbestimmten Zeit durch Drehen dieses Siebes (31) durchgerührt wird.

4. Verfahren nach Anspruch 3, dadurch gekennzeichnet, daß während des Gärens Traubensaft (42) oberhalb des Siebes (31) abgesaugt und unterhalb des zur Unterseite des Siebes (31) aufgestiegenen Tresters (41) wieder in den Tank (10) eingepumpt wird.

5. Vorrichtung zur Behandlung von Nahrungsmitteln in Form einer Flüssigkeit mit Festbestandteilen, mit einem Tank (10), an dessen Unterseite ein Einfüllstutzen (25) zum Einpumpen des Nahrungsmittels angeordnet und der mit einem den gesamten lichten Querschnitt des Tanks (10) senkrecht zur Hochachse (24) überspannenden Sieb (31) versehen ist, das im oberen Bereich des Tanks (10) dicht unterhalb einer, einem vorgebenen Spiegel (43) des einzupumpenden Nahrungsmittels entsprechenden Höhe angeordnet ist, dadurch gekennzeichnet, daß das Sieb (31) um eine waagerechte Achse (33) drehbar ist.

6. Vorrichtung nach Anspruch 5, dadurch gekennzeichnet, daß der Tank (10) mit Rotweinmaische (40) befüllbar ist.

7. Vorrichtung nach Anspruch 5 oder 6, dadurch gekennzeichnet, daß oberhalb des Siebes (31) und unterhalb des vorgegebenen Spiegels (43) in der Wandung (34) des Tanks (10) ein Auslaßstutzen (35) angeordnet ist, der über eine Leitung (36) und eine Pumpe (37) mit einem Einlaß verbunden ist, der unterhalb des Siebes (31) in den Tank (10) mündet.

8. Vorrichtung nach Anspruch 7, dadurch gekennzeichnet, daß der Einlaß eine radiale Leitung (60) des Siebes (31) ist, die in eine axiale Leitung (62) eines nach unten weisenden axialen Arms (61) übergeht, der an seinem unteren Ende mit einem Sprühkopf (63) mit nach oben weisenden Düsen (64) versehen ist.

9. Vorrichtung nach einem der Ansprüche 5 bis 8, dadurch gekennzeichnet, daß das Sieb (31) als Wärmetauscher (71) ausgebildet ist.

10. Vorrichtung nach einem der Ansprüche 5 bis 9, dadurch gekennzeichnet, daß das Sieb (31) an der Tankinnenseite in höhenverstellbaren Halterungen (70) gehalten ist.

## Claims

1. A method of treating foodstuff being composed of a liquid and of solid particles, the foodstuff being filled into a tank (10) from its bottom, until a level (43) of the liquid is above a sieve (31) being arranged in an upper portion of the tank (10) and spanning the entire cross-sectional area thereof and retaining the solid particles, the foodstuff being left alone for a predetermined period of standstill time, characterized in that one uses a sieve (31) being rotatable about a horizontal axis, the foodstuff being stirred by rotation of the sieve (31) after a predetermined period of time has lapsed.

2. The method of claim 1, characterized in that during the period of standstill time liquid is exhausted from above the sieve (31) and is pumped again into the tank (10) below the solid particles having risen up to the underside of the sieve (31).

3. The method of claim 1, characterized in that a red wine grape mash (40) is treated, the mash comprising liquid grape juice (42) and solid pomace particles 2 (41), the mash (40) being filled into the tank (10) from below, until the level (43) of the mash (40) is above the sieve (31), the sieve (31) being arranged in the upper portion of the tank (10), spanning the entire cross-sectional area thereof and retaining the pomace particles (41) of the mash (40), leaving the mash (40) alone for a predetermined period of fermentation in that condition and stirring the mash (40) by rotation of the sieve (31) after a predetermined period of time has lapsed.

4. The method of claim 3, characterized in that during fermentation grape juice (42) is exhausted from above the sieve (31) and is pumped into the tank (10) again below the pomace (41) having risen up to the underside of the sieve (31).

5. An apparatus for treating foodstuff being composed of a liquid and of solid particles, comprising a tank (10) having a filling pipe (25) at its bottom for pumping-in the foodstuff and having a sieve (31), being arranged perpendicularly to a vertical axis (24) of the tank (10) and spanning the entire inner cross-section thereof, the sieve (31) being arranged in an upper portion of the tank (10) slightly below a vertical position corresponding to a predetermined level (43) of the foodstuff to be pumped in, characterized in that the sieve (31) is made rotatable about a horizontal axis (33).

6. The apparatus of claim 5, characterized in that the tank can be filled with red wine grape mash (40).

7. The apparatus of claim 5 or 6, characterized in that an exhaust pipe (35) is arranged in the wall (34) of the tank (10) above the sieve (31) and below the predetermined level (43), the exhaust pipe being connected with an inlet via a pipe line (36) and a pump (37), the inlet communicating with the tank (10) below the sieve (31).

8. The apparatus of claim 7, characterized in that the inlet is a radial pipe (60) of the sieve (31), communicating with an axial pipe (62) of an axial arm (61) directed downwardly, the arm (61) being provided at its lower end with a spray head (63) having upwardly directed jet nozzles (64).

9. The apparatus of any of claims 5 through 8, characterized in that the sieve (31) is made as a heat exchanger (71).

10. The apparatus of any of claims 5 through 9, characterized in that the sieve (31) is held at the inner surface of the tank by means of holding elements (70), being adjustable in height.

## Revendications

1. Procédé de traitement de produits alimentaires se présentant sous la forme d'un liquide avec des particules solides, selon lequel on remplit un réservoir (10) par le bas avec le produit alimentaire, jusqu'à ce que le niveau (43) du liquide se situe au-dessus d'un tamis (31) situé dans la partie supérieure du réservoir (10), occupant toute la surface en section, et retenant les particules solides, et selon lequel on laisse le produit alimentaire se reposer dans cet état pendant un temps de repos prédéterminé, caractérisé en ce qu'on dispose comme tamis une grille (31) tournant autour d'un axe horizontal, et en ce que le produit alimentaire est agité par rotation de ladite grille (31), après une durée prédéterminée.

2. Procédé suivant la revendication 1, caractérisé en ce que, pendant le temps de repos, le liquide situé au-dessus de la grille (31) est soutiré, et refoulé à nouveau dans le réservoir (10), sous les particules solides soulevées sous la face inférieure de la grille.

3. Procédé suivant la revendication 1, caractérisé en ce que l'on traite un moût de vin rouge (40) constitué d'un jus de raisin liquide (42) et de particules solides de marc (41), en ce qu'on remplit un réservoir (10) par le bas avec le moût (40), jusqu'à ce que le niveau (43) du moût (40) se situe au-dessus de la grille (31) située dans la partie supérieure du réservoir (10), occupant toute la surface en section, et retenant les particules de marc (41), en ce que l'on laisse le moût (40) se reposer dans cet état pendant un temps prédéterminé de fermentation, et en ce que le moût (40) est agité, par rotation de ladite grille (31) après une durée prédéterminée.

4. Procédé selon la revendication 3, caractérisé en ce que, pendant le temps de fermentation, du jus de raisin (42) est soutiré au-dessus de la grille (31), et refoulé à nouveau dans le réservoir (10), sous le marc (41) soulevé sous la face inférieure de la grille (31).

5. Dispositif pour le traitement de produits alimentaires se présentant sous forme d'un liquide avec des particules solides, constitué d'un réservoir (10) muni à sa partie inférieure d'un orifice de remplissage (25) pour le refoulement du produit alimentaire, et pourvu d'un tamis (31) qui recouvre toute la surface du réservoir (10) perpendiculairement à l'axe principal (24), ledit tamis étant situé dans la partie supérieure dudit réservoir (10), à une hauteur située légèrement au-dessous du niveau prédéterminé (43) du produit alimentaire à pomper, caractérisé en ce que le tamis (31) est pivotable autour d'un axe horizontal (33).

6. Dispositif suivant la revendication 5, caractérisé en ce que le réservoir (10) peut être rempli de moût de vin rouge.

7. Dispositif suivant la revendication 5 et 6, caractérisé en ce que, au-dessus du tamis (31) et en dessous du niveau prédéterminé (43), dans la paroi (34) du réservoir (10), est prévu un orifice de sortie (35), relié par un tuyau (36) et une pompe (37) à un orifice d'admission qui débouche dans le réservoir (10) au-dessous du tamis (31).

8. Dispositif suivant la revendication 7, caractérisé en ce que l'orifice d'admission est constitué d'un conduit radial (60) inclus dans le filtre (31), et qui se prolonge en un conduit axial (62) formant un coude suivant le même axe (61) dirigé vers le bas, et dont l'extrémité inférieure est munie d'une tête de pulvérisation (63) équipée de buses (64) dirigées vers le haut.

9. Dispositif suivant l'une quelconque des revendications 5 à 8, caractérisé en ce que le tamis (31) est conçu pour fonctionner comme échangeur de chaleur (71).

10. Dispositif suivant l'une quelconque des revendications 5 à 9 caractérisé en ce que le tamis (31) est maintenu contre la paroi intérieure du réservoir dans des fixations de hauteur réglable (70).

Fig. 1

Fig. 2

Fig. 3